# EUROPÄISCHE PATENTSCHRIFT

(11) **EP 1 243 754 B1**
(45) Veröffentlichungstag und Bekanntmachung des Hinweises auf die Patenterteilung: **06.08.2008**
(21) Anmeldenummer: 02405181.5
(22) Anmeldetag: 11.03.2002
(51) Int. Cl.: F01D 5/28, F01D 5/06, B23K 33/00

(54) **Rotor für eine Turbomaschine sowie Verfahren zur Herstellung eines solchen Rotors**
Turbomachine rotor and method of manufacture therefor
Rotor de turbomachine et sa méthode de production

(30) Priorität: 23.03.2001 DE 10114612
(43) Veröffentlichungstag der Anmeldung: 25.09.2002
(73) Patentinhaber: Alstom Technology Ltd, 5400 Baden (CH)
(72) Erfinder: Staubli, Markus, 5605 Dottikon (CH); Wettstein, Hans, Dr., 5442 Fislisbach (CH)

(56) Entgegenhaltungen:
- JP-A- 57 077 078
- US-A- 4 825 522
- US-A- 4 984 927

## Beschreibung

### TECHNISCHES GEBIET

Die vorliegende Erfindung bezieht sich auf das Gebiet der Turbomaschinentechnik. Sie betrifft einen Rotor für eine Turbomaschine gemäss dem Oberbegriff des Anspruchs 1 sowie ein Verfahren zur Herstellung eines solchen Rotors.

### STAND DER TECHNIK

Der Wirkungsgrad einer rotierenden thermischen Maschine, z.B. einer Gasturbine oder dgl., kann durch eine Heraufsetzung der Betriebstemperatur, z.B. auf über 600°C, deutlich verbessert werden. Die Rotoren für den Einsatz bei Temperaturen oberhalb von z.B. 600°C sollten dabei aus besonders kriechfesten Werkstoffen hergestellt werden, damit auf eine aufwendige Rotorkühlung verzichtet werden kann. Dies gilt generell für Rotoren von Gasturbinen, Dampfturbinen, Turboladern, Kompressoren und Pumpen. Mit höher werdender Betriebstemperatur ist es notwendig, von niedriglegierten Stählen auf höherlegierte martensitische Stähle, auf austenitische Stähle und auf Nickelbasislegierungen zu wechseln, damit eine genügende Kriechfestigkeit immer gewährleistet ist. Nickelbasislegierungen sind allerdings erheblich teuerer als niedriglegierte Stähle. Um die Kosten bei einem Rotor zu minimieren, sollte daher nur der Hochtemperaturbereich bzw. -abschnitt des Rotors aus den besonders kriechfesten Werkstoffen bestehen, während die übrigen Bereiche (z.B. die Rotorenden) aus einem geeigneten Stahl hergestellt sein können.

Die Herstellung eines solchen Rotors, der üblicherweise aus mehreren scheibenoder trommelförmigen Segmenten zusammengeschweisst ist, erfordert entsprechend eine Verbindung zwischen unterschiedlichen Werkstoffen. Die Verbindung kann durch Verschrauben oder Verschweissen der Teile hergestellt werden. Eine Schraubverbindung ist übermässigen mechanischen Spannungen ausgesetzt. Sie ist zwar bei kleineren Turbinen schon eingesetzt worden; für grosse Turbinen liegen aber keine Erfahrungen vor.

Wie bereits erwähnt, werden beim Verschweissen der Teile des Rotors nicht nur Schweissverbindungen zwischen zwei Elementen aus dem gleichen Werkstoff benötigt, sondern auch zwischen unterschiedlichen Werkstoffen. Während die Schweissverbindungen zwischen Elementen aus dem gleichen Material eher unkritisch sind, ergeben sich beim Verschweissen von Elementen aus unterschiedlichen Werkstoffen Probleme: Die Erstarrung des Schweissbades führt unter Umständen zu Rissbildung.

In der US-A-4,333,670 ist zur Verbindung von rohrförmigen Teilen aus einem niedrig legierten Kohlenstoffstahl und einer Hochtemperaturlegierung mit hohem Chromanteil der Einsatz einer Übergangsverbindung ("transition joint") vorgeschlagen worden, die aus einer Aneinanderreihung einer Vielzahl von miteinander verschweissten Übergangsteilen besteht, die jeweils eine eigene Materialzusammensetzung aufweisen und eine schrittweise Anpassung der beiden zu verbindenden rohrförmigen Teile aneinander ermöglichen. Die Herstellung einer solchen aus vielen verschweissten Teilen bestehenden Übergangsverbindung ist jedoch - insbesondere bei grossen Dimensionen - ausserordentlich aufwendig. Darüber hinaus beansprucht eine solche Übergangsverbindung einen erheblichen Platz zwischen den zu verbindenden Teilen, der beim Rotor nicht zur Verfügung steht.

In der US-A-4,743,165 wird bei der Herstellung eines Rotors einer Gasturbine, bei dem Scheiben aus einer Superlegierung (IN100) mit Dichtungsteilen aus einer anderen Legierung (IN718) verschweisst werden, ein spezielles Schweissverfahren ("inertia welding") eingesetzt. Eine Verbindung von Teilen aus einer Superlegierung und aus einem Stahl ist nicht vorgesehen.

In der US-A-4,486,385 schliesslich wird vorgeschlagen, zur Verbindung von ringförmigen Elementen, die aus unterschiedlichen Stählen bestehen, durch Schweissen ein rohrförmiges Übergangsstück einzusetzen, das durch pulvermetallurgische Methoden hergestellt wird und eine über die Länge variierende Zusammensetzung aufweist, die an den Enden jeweils mit der Zusammensetzung der zu verbindenden ringförmigen Elemente übereinstimmt. Eine Schweissverbindung zwischen Stahlteilen und Teilen aus einer Nickelbasislegierung ist nicht vorgesehen.

Weiterhin ist aus der JP 57077078 A ein Verfahren zur Verbindung von Keramik und Metall bekannt, bei dem auf einen keramischen Turbinenrotor mittels Plasma-Spritzen ein Gemisch aus einem Keramikmaterial und einem Metallpulver aufgetragen wird. Dabei besteht das Gemisch zunächst vollständig aus Keramik, wobei der Metallanteil allmählich von 0% auf 100% erhöht wird. Die US-A-4984927 betrifft ebenfalls die Verbindung eines keramischen mit einem metallischen Rotorbauteil, jedoch unter Zwischenschaltung eines Pufferelementes. Beide Rotorbauteile werden von einer Metallhülse umschlossen und sowohl untereinander als auch mit der Metallhülse durch Hartlöten verbunden.
Demgegenüber ist aus der US-A-4825522 ein Verfahren zum Herstellen hochbelastbarer Turbinenkomponenten bekannt, bei welchem zunächst ein erstes Legierungspulver durch isostatisches Pressen oder Extrusion verfestigt wird. Danach wird ein zweites Legierungspulver aufgebracht und ebenfalls durch isostatisches Pressen oder Extrusion mit der ersten Legierung verbunden. Anschliessend wird die Verbindung des resultierenden Legierungs-Materials durch superplastisches Schmieden stabilisiert und die Kristall-Korngrösse beider Legierungen durch eine weitere Wärmebehandlung angeglichen.

### DARSTELLUNG DER ERFINDUNG

Es ist Aufgabe der Erfindung, einen Rotor für eine Turbomaschine zu schaffen, der auch ohne aufwendige Kühlung für erhöhte Betriebstemperaturen geeignet ist und ohne Einbussen an mechanischer Festigkeit aus Teilen zusammengeschweisst ist, die aus besonders kriechfesten und weniger kriechfesten Werkstoffen bestehen, sowie ein Verfahren zur Herstellung eines solchen Rotors anzugeben.

Die Aufgabe wird durch die Gesamtheit der Merkmale der Ansprüche 1 und 8 gelöst. Der Kern der Erfindung besteht darin, für die Schweissverbindung zwischen zwei Teilen bzw. Abschnitten, von denen der eine aus einem weniger kriechfesten Werkstoff und der andere aus einem besonders kriechfesten Werkstoff besteht, einen Übergangsbereich vorzusehen, der pulvermetallurgisch erzeugt worden ist und an der Seite, an welcher der Übergangsbereich mit einem der Teile bzw. Abschnitte verschweisst ist, genau die Zusammensetzung des angrenzenden Teiles bzw. Abschnittes aufweist. Dabei sind niedriglegierte Stähle, martensitische oder austenitische Stähle oder Nickelbasislegierungen als Werkstoffe für die Rotorabschnitte vorgesehen. Dadurch, dass der Übergangsbereich von der Zusammensetzung her an der jeweiligen Seite der Schweissverbindung an das angeschweisste Teil angepasst ist, ergibt sich eine sichere und mechanisch hoch belastbare Schweissverbindung. Der Übergangsbereich kann dabei platzsparend und vergleichsweise einfach hergestellt werden.

Gemäss einer ersten Ausführungsform der Erfindung ist der Übergangsbereich nur auf einer Seite mit dem einen Teil verschweisst und auf der anderen Seite mit dem anderen Teil der Verbindung pulvermetallurgisch verbunden.

Insbesondere ist der Übergangsbereich eine Schicht aus einem weniger kriechfesten Werkstoff, welche in der Zusammensetzung dem zweiten Rotorabschnitt entspricht. Die Schicht ist mit dem ersten Rotorabschnitt pulvermetallurgisch verbunden und mit dem zweiten Rotorabschnitt verschweisst. Dabei kann wahlweise der erste Rotorabschnitt ebenfalls pulvermetallurgisch erzeugt oder geschmiedet sein.

Es kann aber auch der Übergangsbereich eine Schicht aus einem besonders kriechfesten Werkstoff sein, welche in der Zusammensetzung dem ersten Rotorabschnitt entspricht. Die Schicht ist dann mit dem zweiten Rotorabschnitt pulvermetallurgisch verbunden und mit dem ersten Rotorabschnitt verschweisst.

Gemäss einer zweiten bevorzugten Ausführungsform wird der Übergangsbereich durch ein separates Übergangsstück gebildet, welches mit beiden Rotorabschnitten verschweisst ist, wobei die Zusammensetzung des Übergangsstückes ortsabhängig ist und auf der dem ersten Rotorabschnitt zugewandten Seite der Zusammensetzung des ersten Rotorabschnitts und auf der dem zweiten Rotorabschnitt zugewandten Seite der Zusammensetzung des zweiten Rotorabschnitts entspricht.

Insbesondere kann das Übergangsstück die Form eines Ringes oder einer ungelochten oder gelochten Scheibe aufweisen.

Eine erste bevorzugte Ausführungsform des erfindungsgemässen Verfahrens ist dadurch gekennzeichnet, dass der Übergangsbereich eine Schicht aus einem dem zweiten Rotorabschnitt entsprechenden, weniger kriechfesten Werkstoff ist, und dass die Schicht und der erste Rotorabschnitt gemeinsam pulvermetallurgisch hergestellt werden.

Eine zweite bevorzugte Ausführungsform des erfindungsgemässen Verfahrens ist dadurch gekennzeichnet, dass der Übergangsbereich eine Schicht aus einem dem zweiten Rotorabschnitt entsprechenden, weniger kriechfesten Werkstoff ist, und dass die Schicht auf den ersten Rotorabschnitt pulvermetallurgisch aufgebracht wird.

Eine dritte bevorzugte Ausführungsform des erfindungsgemässen Verfahrens ist dadurch gekennzeichnet, dass der Übergangsbereich eine Schicht aus einem dem ersten Rotorabschnitt entsprechenden, besonders kriechfesten Werkstoff ist, und dass die Schicht und der zweite Rotorabschnitt gemeinsam pulvermetallurgisch hergestellt werden.

Eine vierte bevorzugte Ausführungsform des erfindungsgemässen Verfahrens ist dadurch gekennzeichnet, dass der Übergangsbereich eine Schicht aus einem dem ersten Rotorabschnitt entsprechenden, besonders kriechfesten Werkstoff ist, und dass die Schicht auf den zweiten Rotorabschnitt pulvermetallurgisch aufgebracht wird.

Eine weitere Ausführungsform des Verfahrens nach der Erfindung zeichnet sich dadurch aus, dass zur Bildung des Übergangsbereiches zunächst pulvermetallurgisch ein separates Übergangsstück hergestellt wird, welches eine ortsabhängige Zusammensetzung aufweist, derart, dass die Zusammensetzung auf der dem ersten Rotorabschnitt zugewandten Seite der Zusammensetzung des ersten Rotorabschnitts und auf der dem zweiten Rotorabschnitt zugewandten Seite der Zusammensetzung des zweiten Rotorabschnitts entspricht, und dass das Übergangsstück anschliessend mit den beiden Rotorabschnitten verschweisst wird.

Dabei ist es für die Prüfung der Schweissnähte von Vorteil, wenn das Übergangsstück zunächst mit dem ersten Rotorabschnitt verschweisst wird, und die zugehörige Schweissnaht vor dem Verschweissen des Übergangsstückes mit dem zweiten Rotorabschnitt zerstörungsfrei, insbesondere mittels Röntgenstrahlen, geprüft wird.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer schematischen Darstellung den Längsschnitt durch ein pulvermetallurgisch erzeugtes Übergangsstück für einen Rotor nach der Erfindung vor dem isostatischen Heisspressen;
- Fig. 2: das Übergangsstück aus Fig. 1 nach dem isostatischen Heisspressen sowie einen beispielhaften zugehörigen ortsabhängigen Verlauf der Zusammensetzung;
- Fig. 3 und 4: das Verschweissen des Übergangsstückes aus Fig. 2 mit dem hochtemperaturfesten Rotorabschnitt;
- Fig. 5: die zerstörungsfreie Prüfung der gemäss Fig. 4 hergestellten Schweissnaht mittels Röntgenaufnahmen;
- Fig. 6: das Verschweissen des Übergangsstückes mit dem aus dem weniger kriechfesten Werkstoff bestehenden Rotorabschnitt (z.B. Rotorende) und die zerstörungsfreie Prüfung der Schweissnaht mittels Ultraschall;
- Fig. 7: ein alternatives Verfahren mit einem Übergangsbereich in Form einer Schicht, die aus Pulver eines weniger kriechfesten Werkstoffes pulvermetallurgisch mit dem Rotorabschnitt verbunden ist, der aus dem besonders kriechfesten Werkstoff besteht; und
- Fig. 8: ein weiteres alternatives Verfahren mit einem Übergangsbereich in Form einer Schicht, die aus dem Pulver des besonders kriechfesten Werkstoffes pulvermetallurgisch mit dem Rotorabschnitt verbunden ist, der aus dem weniger kriechfesten Werkstoff besteht.

### WEGE ZUR AUSFÜHRUNG DER ERFINDUNG

Die Idee der Erfindung besteht darin, für die Schweissverbindung zwischen den aus dem weniger kriechfesten Werkstoff, z.B. Stahl, bestehenden Teilen und den aus dem besonders kriechfesten Werkstoff, z.B. einer Nickelbasislegierung, bestehenden Teilen ein Übergangsstück einzusetzen, in dem die Materialzusammensetzung von der des weniger kriechfesten Werkstoffes bzw. Stahles am einen Ende des Übergangsstückes übergeht in die des besonders kriechfesten Werkstoffes bzw. der Nickelbasislegierung am anderen Ende des Übergangsstückes. Das Übergangsstück wird pulvermetallurgisch hergestellt.

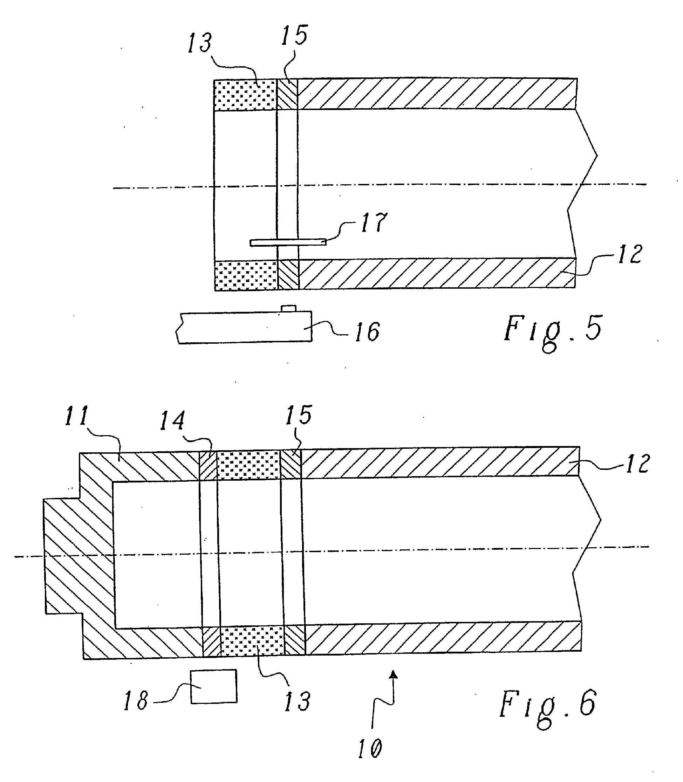

Für einen in Fig. 6 dargestellten Rotor 10 einer Gasturbine, bei dem ein hochtemperaturfester erster Rotorabschnitt 12 aus einer Nickelbasislegierung mit einem weniger hohen Temperaturen ausgesetzten zweiten Rotorabschnitt 11 schweisstechnisch verbunden ist, wird ein scheiben- oder trommelförmiges Übergangsstück 13 benötigt. Das Übergangsstück 13 ist auf der linken Seite über eine erste Schweissnaht 14 mit dem Rotorabschnitt 11 und auf der rechten Seite über eine zweite Schweissnaht 15 mit dem Rotorabschnitt 12 verschweisst. Auf die gleiche Art und Weise können natürlich auch Rotoren von Dampfturbinen, Turboladern, Kompressoren oder Pumpen aufgebaut werden.

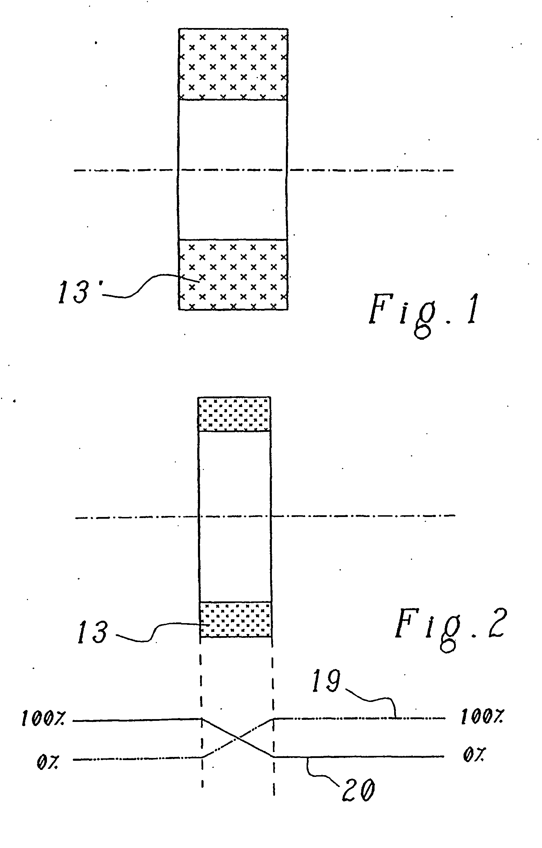

Zur Herstellung des Übergangsstückes 13 wird zunächst gemäss Fig. 1 eine Vorform 13' erzeugt, in der ein Pulver aus dem Stahl und ein Pulver aus der Nickelbasislegierung so miteinander vermischt werden, dass das dem Rotorabschnitt 11 zugewandte Ende aus 100% Stahlpulver und das dem Rotorabschnitt 12 zugewandte Ende aus 100% Pulver der Nickelbasislegierung besteht, während sich zwischen den beiden Ende die Anteile an Stahlpulver und dem Pulver der Nickelbasislegierung stetig ändern. Es ist wichtig, dass das Übergangsstück 13 ohne Aufschmelzen hergestellt wird, um die Bildung von Rissen beim Erstarren zu vermeiden. Die axiale Länge des Übergangsstückes 13 sollte klein gehalten werden, damit der Rotor 10 nicht unnötig verlängert wird, jedoch nicht so kurz, dass sich die Wärmeeinflusszonen der beiden Schweissungen überlappen. In der Übergangszone sollten keine Schaufelbefestigungen liegen. Vielmehr kann an dieser Stelle eine Leitschaufel im gegenüberliegenden Gehäuseteil befestigt sein.

Aus der Vorform 13' wird durch isostatisches Heisspressen (HIP) bei hohen Temperaturen und Drücken und eine anschliessende Wärmebehandlung das 100% verdichtete Übergangsstück 13 gemäss Fig. 2 erzeugt. Im Übergangsstück 13 fällt der Anteil an Stahl dabei gemäss Kurve 20 von links nach rechts z.B. linear von 100% auf 0%, während der Anteil an Nickelbasislegierung gemäss Kurve 19 entsprechend linear von 0% auf 100% steigt.

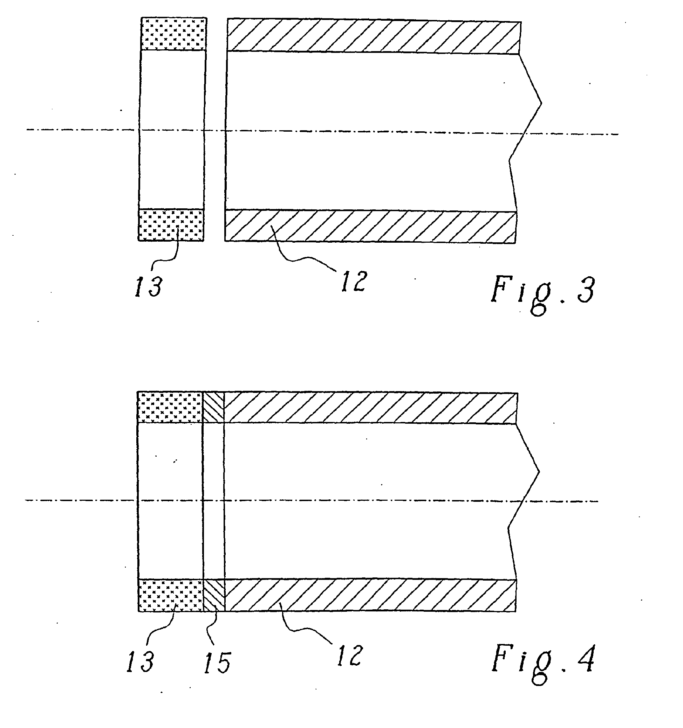

Das fertige Übergangsstück 13 wird nun gemäss Fig. 3 und 4 mit dem rechten Ende, das aus 100% Nickelbasislegierung besteht, mit dem Rotorabschnitt 12 aus der Nickelbasislegierung verschweisst, wobei eine entsprechende Schweisselektrode verwendet wird. Hierdurch wird eine rissfreie Schweissnaht 15 ermöglicht.

Es ist wichtig, anzumerken, dass die Schweissverbindung der Nickelbasislegierungen, d.h., die Schweissnaht 15, wegen der Schalldämpfung im Material nicht befriedigend mittels Ultraschall zerstörungsfrei geprüft werden kann. Die Prüfung muss daher durch Röntgenaufnahmen erfolgen, die den Zugang zu beiden Seiten (Innen- und Aussenseite) der Schweissverbindung erfordern. Aus diesem Grunde wird zunächst nur die Schweissverbindung zwischen dem Übergangsstück 13 und dem Rotorabschnitt 12 hergestellt. Die Schweissnaht 15 dieser Verbindung wird dann gemäss Fig. durch Röntgenaufnahmen geprüft, wobei z.B. eine Röntgenstrahlquelle 16 die Schweissnaht 15 von aussen durchstrahlt und mittels eines innen angeordneten Röntgenfilms Aufnahmen gemacht werden.

Nach der Prüfung der Schweissnaht 15 wird der aus Stahl bestehende Rotorabschnitt 11 mit dem "Stahlende" des Übergangsstückes 13 unter Einsatz einer Stahlelektrode verschweisst und die erzeugte Schweissnaht 14 anschliessend mittels eines Ultraschallprüfkopfes 18 zerstörungsfrei geprüft. Da in diesem Fall ein Zugang zum Inneren des Rotors 10 nicht nötig ist, ergeben sich hierbei keine Schwierigkeiten, selbst wenn der Rotorabschnitt 11 ein (geschlossenes) Rotorende sein sollte.

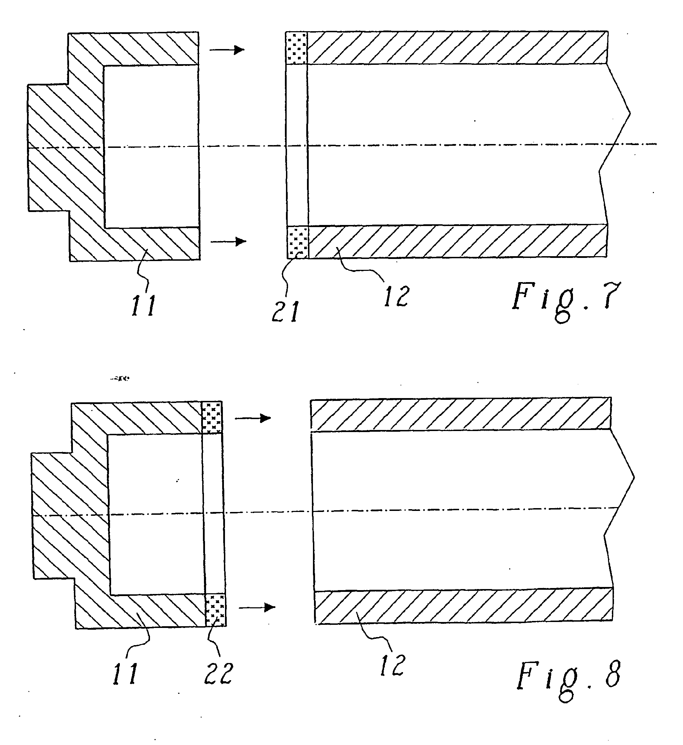

Im Rahmen der Erfindung sind aber auch andere Varianten der Schweissverbindung denkbar, bei denen anstelle des separat erzeugten Übergangsstückes 13 Schichten (21, 22 in Fig. 7 bzw. 8) eingesetzt werden, die pulvermetallurgisch auf der Verbindungsfläche eines der beiden zu verbindenden Rotorabschnitte 11, 12 aufgebracht und mit dieser verbunden werden, und deren freie Flächen mit dem jeweils anderen Rotorabschnitt verschweisst werden.

In Fig. 7 wird der Rotorabschnitt 12 aus der Nickelbasislegierung pulvermetallurgisch mit einer Schicht 21 aus Stahlpulver versehen. Dies kann entweder dadurch geschehen, dass der Rotorabschnitt 12 und die Schicht 21 zusammen pulvermetallurgisch hergestellt werden, oder dass die Schicht 21 mittels isostatischem Heisspressen auf den fertig geschmiedeten Rotorabschnitt 12 aufgebracht wird.

Die beiden so vorbereiteten Teile können dann mittels einer Stahlelektrode verschweisst und die Schweissnaht mit Ultraschall (von aussen) geprüft werden.

Es ist aber auch gemäss Fig. 8 denkbar, analog zu Fig. 7 den Rotorabschnitt 11 aus Stahl pulvermetallurgisch mit einer Schicht 22 aus der Nickelbasislegierung zu versehen, wobei der Rotorabschnitt 11 gleichzeitig pulvermetallurgisch oder vorher auf andere Weise erzeugt werden kann. Die Verschweissung erfolgt dann zwischen zwei Flächen aus der Nickelbasislegierung mittels einem artgleichen Schweissgut. Diese Variante ist hinsichtlich der zerstörungsfreien Prüfung der Schweissnaht weniger günstig, wenn der Rotorabschnitt 11 ein Rotorende ist, und wegen des fehlenden Zugangs zum Innenraum auf eine Röntgenuntersuchung verzichtet werden muss. Vorteilhaft dabei ist aber die Tatsache, dass das Schweissgut aus Nickelbasislegierung eine höhere Festigkeit bei Betriebstemperatur besitzt als ein Schweissgut aus Stahl.

### BEZUGSZEICHENLISTE

- 10: Rotor (Turbomaschine)
- 11: Rotorabschnitt (mit reduzierter Betriebstemperatur)
- 12: Rotorabschnitt (mit hoher Betriebstemperatur)
- 13: Übergangsstück
- 13': Vorform (Übergangsstück)
- 14, 15: Schweissnaht
- 16: Röntgenstrahlquelle
- 17: Röntgenfilm
- 18: Ultraschallprüfkopf
- 19: Kurve Anteil des besonders kriechfesten Werkstoffes (z.B. Nickelbasislegierung)
- 20: Kurve Anteil des weniger kriechfesten Werkstoffes (z.B. Stahl)
- 21, 22: pulvermetallurgische Schicht

## Patentansprüche

1. Rotor (10) für eine Turbomaschine, umfassend wenigstens einen ersten, vorzugsweise scheibenförmigen, Rotorabschnitt (12), welcher hohen Betriebstemperaturen ausgesetzt ist und aus einem besonders kriechfesten Werkstoff besteht, sowie wenigstens einen zweiten, vorzugsweise scheibenförmigen, Rotorabschnitt (11), welcher reduzierten Betriebstemperaturen ausgesetzt ist und aus einem weniger kriechfesten Werkstoff besteht, wobei der erste und der zweite Rotorabschnitt (11, 12) schweisstechnisch miteinander verbunden sind, **dadurch gekennzeichnet, dass** der erste Rotorabschnitt (12) aus martensitischen oder austenitischen stählen oder Nickelbasislegierungen besteht, des weiteren der zweite Rotorabschnitt (11) aus niedriglegierten stählen besteht, und dass zur Verbindung der beiden Rotorabschnitte (11, 12) zwischen den beiden Rotorabschnitten (11, 12) ein pulvermetallurgisch erzeugter Übergangsbereich (13, 21, 22) angeordnet ist, welcher zumindest auf einer Seite mit einem der beiden Rotorabschnitte (11, 12) verschweisst ist, und auf dieser Seite dieselbe Zusammensetzung aufweist wie der Rotorabschnitt, mit welchem er verschweisst ist.

2. Rotor nach Anspruch 1, **dadurch gekennzeichnet, dass** der Übergangsbereich eine Schicht (21) aus Stahl ist, welche in der Zusammensetzung dem zweiten Rotorabschnitt (11) entspricht, und dass die Schicht (21) mit dem ersten Rotorabschnitt (12) pulvermetallurgisch verbunden und mit dem zweiten Rotorabschnitt (11) verschweisst ist.

3. Rotor nach Anspruch 2, **dadurch gekennzeichnet, dass** der erste Rotorabschnitt (12) ebenfalls pulvermetallurgisch erzeugt ist.

4. Rotor nach Anspruch 2, **dadurch gekennzeichnet, dass** der erste Rotorabschnitt (12) geschmiedet ist

5. Rotor nach Anspruch 1, **dadurch gekennzeichnet, dass** der Übergangsbereich eine Schicht (22) aus einem besonders kriechfesten Werkstoff ist, welche in der Zusammensetzung dem ersten Rotorabschnitt (12) entspricht, und dass die Schicht (22) mit dem zweiten Rotorabschnitt (11) pulvermetallurgisch verbunden und mit dem ersten Rotorabschnitt (12) verschweisst ist.

6. Rotor nach Anspruch 1, **dadurch gekennzeichnet, dass** der Übergangsbereich durch ein separates Übergangsstück (13) gebildet wird, welches mit beiden Rotorabschnitten verschweisst ist, und dass die Zusammensetzung des Übergangsstückes (13) ortsabhängig ist und auf der dem ersten Rotorabschnitt (12) zugewandten Seite der Zusammensetzung des ersten Rotorabschnitts (12) und auf der dem zweiten Rotorabschnitt (11) zugewandten Seite der Zusammensetzung des zweiten Rotorabschnitts (11) entspricht.

7. Rotor nach Anspruch 6, **dadurch gekennzeichnet, dass** das Übergangsstück (13) die Form eines Ringes oder einer ungelochten oder gelochten Scheibe aufweist.

8. Verfahren zum Herstellen eines Rotors nach Anspruch 1, **dadurch gekennzeichnet, dass** der Übergangsbereich (13, 21, 22) aus einem Metallpulver entsprechender Zusammensetzung durch isostatisches Heisspressen (HIP) erzeugt wird.

9. Verfahren nach Anspruch 8, **dadurch gekennzeichnet, dass** der Übergangsbereich eine Schicht (21) aus einem dem zweiten Rotorabschnitt (11) entsprechenden, weniger kriechfesten Werkstoff, insbesondere Stahl, ist, und dass die Schicht (21) und der erste Rotorabschnitt (12) gemeinsam pulvermetallurgisch hergestellt werden.

10. Verfahren nach Anspruch 8, **dadurch gekennzeichnet, dass** der Übergangsbereich eine Schicht (21) aus einem dem zweiten Rotorabschnitt (11) entsprechenden, weniger kriechfesten Werkstoff, insbesondere Stahl, ist, und dass die Schicht (21) auf den ersten Rotorabschnitt (12) pulvermetallurgisch aufgebracht wird.

11. Verfahren nach Anspruch 8, **dadurch gekennzeichnet, dass** der Übergangsbereich eine Schicht (22) aus einem dem ersten Rotorabschnitt (12) entsprechenden, besonders kriechfesten Werkstoff, insbesondere aus einer Nickelbasislegierung, ist, und dass die Schicht (22) und der zweite Rotorabschnitt (11) gemeinsam pulvermetallurgisch hergestellt werden.

12. Verfahren nach Anspruch 8, **dadurch gekennzeichnet, dass** der Übergangsbereich eine Schicht (22) aus einem dem ersten Rotorabschnitt (12) entsprechenden, besonders kriechfesten Werkstoff, insbesondere aus einer Nickelbasislegierung, ist, und dass die Schicht (22) auf den zweiten Rotorabschnitt (11) pulvermetallurgisch aufgebracht wird.

13. Verfahren nach Anspruch 8, **dadurch gekennzeichnet, dass** zur Bildung des Übergangsbereiches zunächst pulvermetallurgisch ein separates Übergangsstück (13) hergestellt wird, welches eine ortsabhängige Zusammensetzung aufweist, derart, dass die Zusammensetzung auf der dem ersten Rotorabschnitt (12) zugewandten Seite der Zusammensetzung des ersten Rotorabschnitts (12) und auf der dem zweiten Rotorabschnitt (11) zugewandten Seite der Zusammensetzung des zweiten Rotorabschnitts (11) entspricht, und dass das Übergangsstück anschliessend mit den beiden Rotorabschnitten (11, 12) verschweisst wird.

14. Verfahren nach Anspruch 13, **dadurch gekennzeichnet, dass** das Übergangsstück (13) zunächst mit dem ersten Rotorabschnitt (12) verschweisst wird, und dass die zugehörige Schweissnaht (15) vor dem Verschweissen des Übergangsstückes (13) mit dem zweiten Rotorabschnitt (11) zerstörungsfrei, insbesondere mittels Röntgenstrahlen, geprüft wird.

## Claims

1. Rotor (10) for a turbomachine, comprising at least one first, preferably disk-like rotor section (12), which is exposed to high operating temperatures and consists of a particularly creep-resistant material and at least one second, preferably disk-like rotor section (11), which is exposed to lower operating temperatures and consists of a less creep-resistant material, the first and second rotor sections (11, 12) being joined to one another by welding, **characterized in that** the first rotor section (12) consists of martensitic or austenitic steels or nickel-based alloys, furthermore the second rotor section (11) consists of low alloy steels, and **in that** to join the two rotor sections (11, 12), a transition region (13, 21, 22) is arranged between the two rotor sections (11, 12), which transition region is produced by powder metallurgy, is welded to one of the two rotor sections (11, 12) at least on one side, and on this side has the same composition as the rotor section to which it is welded.

2. Rotor according to Claim 1, **characterized in that** the transition region is a layer (21) of steel, the composition of which corresponds to that of the second rotor section (11), and **in that** the layer (21) is joined to the first rotor section (12) by powder metallurgy and is welded to the second rotor section (11).

3. Rotor according to Claim 2, **characterized in that** the first rotor section (12) is likewise produced by powder metallurgy.

4. Rotor according to Claim 2, **characterized in that** the first rotor section (12) is forged.

5. Rotor according to Claim 1, **characterized in that** the transition region is a layer (22) of a particularly creep-resistant material, the composition of which corresponds to that of the first rotor section (12), and **in that** the layer (22) is joined to the second rotor section (11) by powder metallurgy and is welded to the first rotor section (12).

6. Rotor according to Claim 1, **characterized in that** the transition region is formed by a separate transition piece (13) which is welded to both rotor sections, and **in that** the composition of the transition piece (13) is position-dependent and, on the side facing the first rotor section (12), corresponds to the composition of the first rotor section (12) and, on the side facing the second rotor section (11), corresponds to the composition of the second rotor section (11).

7. Rotor according to Claim 6, **characterized in that** the transition piece (13) is in the form of a ring or an unperforated or perforated disk.

8. Process for producing the rotor according to Claim 1, **characterized in that** the transition region (13, 21, 22) is produced from a metal powder of appropriate composition by hot isostatic pressing (HIP).

9. Process according to Claim 8, **characterized in that** the transition region is a layer (21) of a less creep-resistant material, in particular steel, which corresponds to the second rotor section (11), and **in that** the layer (21) and the first rotor section (12) are produced together by powder metallurgy.

10. Process according to Claim 8, **characterized in that** the transition region is a layer (21) of a less creep-resistant material, in particular steel, which corresponds to the second rotor section (11), and **in that** the layer (21) is applied to the first rotor section (12) by powder metallurgy.

11. Process according to Claim 8, **characterized in that** the transition region is a layer (22) of a particularly creep-resistant material, which corresponds to the first rotor section (12), in particular of a nickel-based alloy, and **in that** the layer (22) and the second rotor section (11) are produced together by powder metallurgy.

12. Process according to Claim 8, **characterized in that** the transition region is a layer (22) of a particularly creep-resistant material, which corresponds to the first rotor section (12), in particular of a nickel-based alloy, and **in that** the layer (22) is applied to the second rotor section (11) by powder metallurgy.

13. Process according to Claim 8, **characterized in that**, to form the transition region, first of all a separate transition piece (13) is produced by powder metallurgy, which transition piece has a position-dependent composition, such that the composition, on the side facing the first rotor section (12), corresponds to the composition of the first rotor section (12) and, on the side facing the second rotor section (11), corresponds to the composition of the second rotor section (11), and **in that** the transition piece is then welded to the two rotor sections (11, 12).

14. Process according to Claim 13, **characterized in that**, first of all, the transition piece (13) is welded to the first rotor section (12), and **in that** the associated weld seam (15) undergoes nondestructive testing, in particular by means of X-rays, before the transition piece (13) is welded to the second rotor section (11).

## Revendications

1. Rotor (10) pour une turbomachine, comprenant au moins une première portion de rotor (12), de préférence en forme de disque, qui est exposée à des hautes températures de fonctionnement, et qui se compose d'un matériau particulièrement résistant au fluage, ainsi qu'au moins une deuxième portion de rotor (11), de préférence en forme de disque, qui est exposée à des températures de fonctionnement moins élevées et qui se compose d'un matériau moins résistant au fluage, la première et la deuxième portion de rotor (11, 12) étant connectées l'une à l'autre par une technique de soudage, **caractérisé en ce que** la première portion de rotor (12) se compose d'aciers martensitiques ou austénitiques ou d'alliages à base de nickel, et la deuxième portion de rotor (11) se compose en outre d'aciers plus faiblement alliés, et **en ce que** pour la connexion des deux portions de rotor (11, 12), on dispose entre les deux portions de rotor (11, 12) une région de transition (13, 21, 22) produite par frittage, qui est soudée au moins d'un côté à l'une des deux portions de rotor (11, 12), et qui présente de ce côté la même composition que la portion de rotor à laquelle elle est soudée.

2. Rotor selon la revendication 1, **caractérisé en ce que** la région de transition est une couche (21) en acier, qui a une composition correspondant à celle de la deuxième portion de rotor (11), et **en ce que** la couche (21) est connectée par frittage à la première portion de rotor (12) et est soudée à la deuxième portion de rotor (11).

3. Rotor selon la revendication 2, **caractérisé en ce que** la première portion de rotor (12) est également produite par frittage.

4. Rotor selon la revendication 2, **caractérisé en ce que** la première portion de rotor (12) est forgée.

5. Rotor selon la revendication 1, **caractérisé en ce que** la région de transition est une couche (22) en un matériau particulièrement résistant au fluage, qui a une composition correspondant à celle de la première portion de rotor (12), et **en ce que** la couche (22) est connectée par frittage à la deuxième portion de rotor (11) et est soudée à la première portion de rotor (12).

6. Rotor selon la revendication 1, **caractérisé en ce que** la région de transition est formée par une pièce de transition séparée (13) qui est soudée aux deux portions de rotor, et **en ce que** la composition de la pièce de transition (13) dépend de l'endroit et correspond, du côté tourné vers la première portion de rotor (12), à la composition de la première portion de rotor (12), et, du côté tourné vers la deuxième portion de rotor (11), à la composition de la deuxième portion de rotor (11).

7. Rotor selon la revendication 6, **caractérisé en ce que** la pièce de transition (13) présente la forme d'une bague ou d'un disque perforé ou non perforé.

8. Procédé de fabrication d'un rotor selon la revendication 1, **caractérisé en ce que** la région de transition (13, 21, 22) est produite à partir d'une poudre métallique de composition correspondante, par pressage thermique isostatique (HIP).

9. Procédé selon la revendication 8, **caractérisé en ce que** la région de transition est une couche (21) en un matériau moins résistant au fluage, en particulier de l'acier, correspondant à la deuxième portion de rotor (11), et **en ce que** la couche (21) et la première portion de rotor (12) sont fabriquées conjointement par frittage.

10. Procédé selon la revendication 8, **caractérisé en ce que** la région de transition est une couche (21) en un matériau moins résistant au fluage, en particulier de l'acier, correspondant à la deuxième portion de rotor (11), et **en ce que** la couche (21) est appliquée sur la première portion de rotor (12) par frittage.

11. Procédé selon la revendication 8, **caractérisé en ce que** la région de transition est une couche (22) en un matériau particulièrement résistant au fluage, correspondant à la première portion de rotor (12), notamment en un alliage à base de nickel et **en ce que** la couche (22) et la deuxième portion de rotor (11) sont fabriquées conjointement par frittage.

12. Procédé selon la revendication 8, **caractérisé en ce que** la région de transition est une couche (22) en un matériau particulièrement résistant au fluage correspondant à la première portion de rotor (12), notamment en un alliage à base de nickel et **en ce que** la couche (22) est appliquée sur la deuxième portion de rotor (11) par frittage.

13. Procédé selon la revendication 8, **caractérisé en ce que** pour former la région de transition, on fabrique d'abord par frittage une pièce de transition séparée (13), qui présente une composition dépendant de l'endroit, de telle sorte que la composition, du côté tourné vers la première portion de rotor (12), corresponde à la composition de la première portion de rotor (12) et que la composition, du côté tourné vers la deuxième portion de rotor (11), corresponde à la composition de la deuxième portion de rotor (11), et **en ce que** la pièce de transition est ensuite soudée aux deux portions de rotor (11, 12).

14. Procédé selon la revendication 13, **caractérisé en ce que** la pièce de transition (13) est d'abord soudée à la première portion de rotor (12) et **en ce que** le joint de soudure associé (15) est contrôlé avant le soudage de la pièce de transition (13) à la deuxième portion de rotor (11), sans destruction, notamment au moyen de rayons X.
